# EUROPEAN PATENT APPLICATION

(11) **EP 0 903 242 A2**
(43) Date of publication of application: **24.03.1999**
(21) Application number: 98116239.9
(22) Date of filing: 27.08.1998
(51) Int. Cl.: B41J 2/45

(54) **Image forming device using photoconductor belt and LED array**

(30) Priority: 27.08.1997 JP 231385/97
(71) Applicant: NEC CORPORATION, Tokyo (JP)
(72) Inventor: Takano, Kagehisa, Kashiwazaki-shi, Niigata (JP)
(74) Representative: Betten & Resch

(57) **Abstract**

An image forming device of this invention comprises a photoconductor belt 2 having a first and second light transmitting holes 1a and 1b formed in opposite end portion thereof in a width direction, an LED array 3 for forming an electrostatic latent image on the photoconductor belt 2 and correction device for detecting an error angle between a main scanning direction of the LED array 3 and a direction perpendicular to a running direction of the photoconductor belt 2 and correcting the error angle. The correction device comprises a first and second optical sensors 5a and 5b for detecting lights passing through the first and second light transmitting holes 1a and 1b, respectively, a detection circuit for detecting a time difference between optical detection signals produced by the first and second optical sensors and detecting an error angle and a correction mechanism for correcting the error angle by rotating the main scanning direction of the LED array correspondingly to the detected error angle.

## Description

### BACKGROUND OF THE INVENTION

### Field of the Invention

The present invention relates to an image forming device for forming an electrostatic latent image in a photoconductor belt by means of a laser emitting diode (LED) array, forming a toner image corresponding to the electrostatic latent image and transferring the toner image onto a recording sheet. Particularly, the present invention relates to an image forming device having a function of correcting a positional deviation of the LED array with respect to the photoconductor.

### Description of the Prior Art

A first of the conventional image forming devices, which performs a color image printing by electro-photography, utilizes a photoconductor belt and an developing unit having yellow, magenta, cyan and black toners. The photoconductor belt usually takes the form of an endless belt driven by rollers during an image forming process.

Now, the color image forming process in the first conventional image forming device will be described. First, the photoconductor belt is electrically charged by a charging device. Then, an electrostatic latent image is formed on the photoconductor belt by an exposing unit including an LED array and developed with a first color (yellow) toner, resulting in a yellow toner image on the photoconductor belt. Thereafter, the photoconductor belt having the yellow toner image formed thereon is electrically charged again by the charging device. Then, an electrostatic latent image is formed on the photoconductor belt by the exposing unit and developed with a second color (magenta) toner, resulting in a magenta toner image on the photoconductor belt. In this case, the magenta toner image is formed on the yellow toner image in an overlapping relation. Such toner image formation is also performed with a third (cyan) toner and a fourth (black) toner. As a result, a toner image having four colors is formed on the photoconductor belt during a time for which the photoconductor belt revolves 4 times.

Thereafter, the 4-color toner image is transferred onto a recording sheet by a transfer unit. The toner image transferred onto the recording sheet is fixed thereon by a fixing unit and the recording sheet is ejected.

A second of the conventional image forming devices utilizes four charging units and four exposing units for independently forming 4 electrostatic latent images for respective 4 color toners. In this case, a 4-color toner image can be formed at a higher speed than the first conventional image forming device by performing the respective charging, exposing and developing steps four times for one revolution of a photoconductor belt.

In the first conventional image forming device, there is a problem of deviation of recording position due to positional error of the photoconductor belt and/or positioning error of the LED array. That is, the recording position may be deviated due to positional error between the photoconductor belt and the LED array for forming the electrostatic latent image.

Further, in the second conventional image forming device, there is another problem of color deviation between images of different toner colors due to positional error of the respective LED arrays, in addition to the problem of the first conventional image forming device.

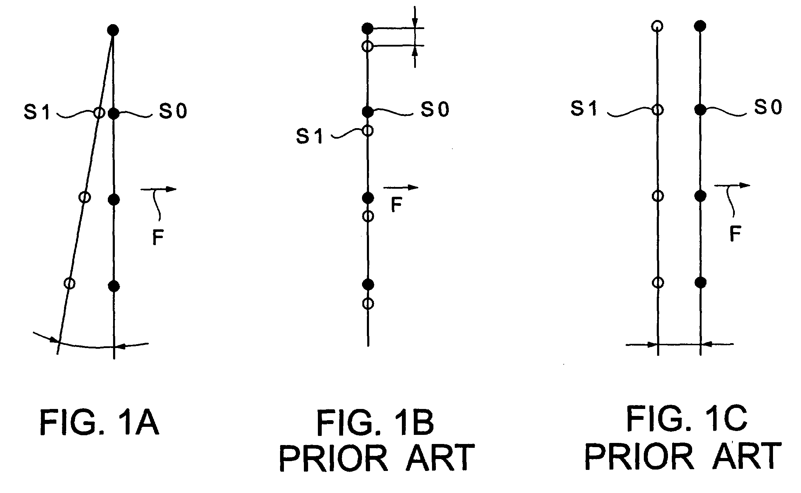

Figs. 1A, 1B and 1C show positional error patterns between desired exposing positions S0 on the photoconductor belt and actual exposing positions S1 of the LED array. In each of these figures, the desired exposing positions S0 are arranged in a direction perpendicular to a moving direction F of the photoconductor belt, that is, a width direction of the photoconductor belt. In order to solve the positional error problem of the actual exposing positions S1, the following proposals have been made.

In an image forming device disclosed in Japanese Patent Application Laid-open No. Hei 4-336553 (referred to as "first prior art", hereinafter), a position of an LED array is corrected correspondingly to a positional error of a photoconductor belt in a sub scanning direction (the belt moving direction). In the first prior art, a mark is provided on a portion of the photoconductor belt and a rotation number of a roller for driving the photoconductor belt is detected by an encoder. A lighting timing of the LED array and a position of the LED array exposing device are controlled on the basis of a detection signal of the mark and the rotation number of the roller detected by the encoder. As a result, the positional error of the exposing position S1 of the LED array is corrected with respect to the moving direction (the sub scanning direction) of the photoconductor belt, as shown in Fig. 1C.

In an image forming device disclosed in Japanese Patent Application Laid-open No. Hei 4-326373 (referred to as "second prior art", hereinafter), the exposing start timing of an LED array is corrected correspondingly to the positional error of a photoconductor belt in the sub scanning direction (the belt moving direction) by changing the exposing timing of an image data according to a detection signal of a mark provided in a position of a photoconductor belt. As a result, the positional error of the exposing position S1 of the LED array in a moving direction (sub scanning direction) F of the photoconductor belt is corrected as shown in Fig. 1C.

In an image forming device disclosed in Japanese Patent Application Laid-open No. Hei 4-9975 (referred to as "third prior art", hereinafter), a positional error is corrected by detecting a position of a photoconductor belt in a main scanning direction. The image forming device of the third prior art comprises means for detecting a position of the photoconductor belt and an optical write position is corrected by a detection signal output from the detecting means. A positional error of an LED array in a lateral direction (main scanning direction), that is, in a moving direction of a photoconductor belt is corrected as shown in Fig. 1B. Further, start timing of the image formation in the main scanning direction and a sub scanning direction can be regulated electrically according to an amount of detected positional error.

Main objects of the first and second prior arts are to correct the exposing position error in the sub scanning direction shown in Fig. 1C and the object of the third prior art is to remove the exposing position in the main scanning direction shown in Fig. 1B. However, for an exposing position error in which the exposing position S1 of the LED array is not perpendicular to the moving direction F of the photoconductor belt as shown in Fig. 1A, the first, second and third prior arts are not effective.

Therefore, the problems of color deviation and inclination of recorded image can not be solved by them.

### SUMMARY OF THE INVENTION

An object of the present invention is to provide an image forming device equipped with a device for correcting a positional error of an LED array such that an exposing position provided by the LED becomes perpendicular to a moving direction of a photoconductor belt.

Another object of the present invention is to provide an image forming device capable of easily correcting a positional error of an LED array.

In order to achieve the above objects, an image forming device according to the present invention comprises a photoconductor belt, an LED array for forming an electrostatic latent image on the photoconductor belt and a correction device for detecting an error angle between a main scanning direction of the LED array and a direction perpendicular to a running direction of the photoconductor belt and correcting the error angle.

In more detail, the image forming device comprises a photoconductor belt having first light transmitting holes and second light transmitting holes formed in opposite end portions of the photoconductor belt in a width direction thereof, respectively, an LED array, first and second optical sensors for detecting lights passing through the first and second light transmitting holes, respectively, a detection circuit for detecting a time difference of optical detection signals detected by the first and second optical sensors and detecting the error angle and a correction device for correcting the error angle by rotating the main scanning direction of the LED array correspondingly to the detected error angle.

Further, the correction device comprises a first holder for holding the LED array, a second holder to be coupled with the first holder, a rotary fulcrum shaft for coupling the first holder to the second holder and drive means for rotating the first holder about the rotary fulcrum shaft.

### BRIEF DESCRIPTION OF THE DRAWINGS

Fig. 1A is an illustration for explaining a position error correcting method for an image forming device according to the present invention;
Figs. 1B and 1C are illustrations for explaining a position error correcting method for conventional image forming devices, respectively;
Fig. 2 shows a first embodiment of the image forming device according to the present invention;
Fig. 3 is a perspective view of a portion of the image forming device shown in Fig. 2, including an exposing unit thereof;
Fig. 4 is a cross sectional view taken along a line C-C in Fig. 3;
Fig. 5 is a perspective view of a holder for supporting an LED holder;
Fig. 6 is a perspective view of the LED holder;
Fig. 7 shows waveforms showing an operation of an optical sensor;
Fig. 8 is a block diagram of a correcting circuit; and
Fig. 9 shows a second embodiment of the image forming device according to the present invention.

### DETAILED DESCRIPTION OF THE PREFERRED EMBODIMENTS

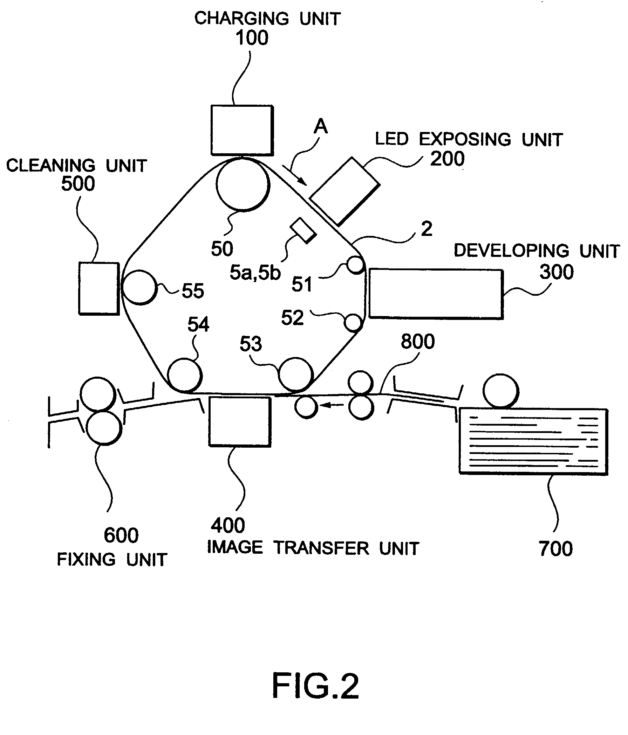

Fig. 2 shows a first embodiment of the image forming device according to the present invention. In Fig. 2, a photoconductor belt 2 includes a photoconductor whose amount of electrostatic charge is changed by light.

The photoconductor belt 2 takes the form of an endless belt which is driven in clockwise direction by rollers 50, 51, 52, 53, 54 and 55 during an image forming process.

An electrostatic charging unit 100, an LED exposing unit 200, a developing unit 300, an image transfer unit 400 and a cleaning unit 500 are arranged along the photoconductor belt 2 in the order. The electrostatic charging unit 100 charges the photoconductor belt 2 electrostatically and the LED exposing unit 200 includes an LED array arranged oppositely to a charged portion of the photoconductor belt 2 and forms an electrostatic latent image thereon by driving the LED array according to an image signal.

The developing unit 300 contains four color toners, yellow toner, magenta toner, cyan toner and black toner, and attaches respective toners to the electrostatic latent image on the photoconductor belt 2 according to patterns of the respective colors thereof so that a 4-color toner image is formed on the photoconductor belt 2. The transfer unit 400 transfers the toner image on the photoconductor belt 2 to a recording sheet 800 transported from a recording sheet stacker 700. The transferred toner image is fixed on the recording sheet by a fixing unit 600.

Residual toner on the photoconductor belt 2 after the toner image transfer is removed by the cleaning unit 500.

Now, the color image forming process performed by the image forming device shown in Fig. 2 will be described. First, the photoconductor belt 2 is electrostatically charged by the charging unit 100. Then, a first electrostatic latent image is formed on the photoconductor belt 2 by the LED exposing unit 200 equipped with the LED array. Thereafter, the first electrostatic latent image is developed with toner of a first color (yellow) by the developing unit 300. Thus, a yellow toner image is formed on the photoconductor belt 2.

The photoconductor belt 2 is further driven and charged again by the charging unit 100 with the yellow toner image being thereon. Then, a second electrostatic latent image is formed on the photoconductor belt 2 by the LED exposing unit 200. The second electrostatic latent image is developed with a second color (magenta) and a magenta image is formed on the photoconductor belt 2 in an overlapping relation to the yellow toner image. This operation is repeated for a third color (cyan) toner and a fourth color (black) toner, respectively, resulting in a 4-color toner image on the photoconductor belt 2.

Thereafter, the 4-color toner image is transferred onto the recording sheet 800 by the transfer unit 400 and fixed thereon by the fixing unit 600. Thereafter, the recording sheet 800 having the 4-color toner image fixed thereon is ejected.

The features of this embodiment of the present invention reside in constructions of the LED exposing unit 200 and the photoconductor belt 2.

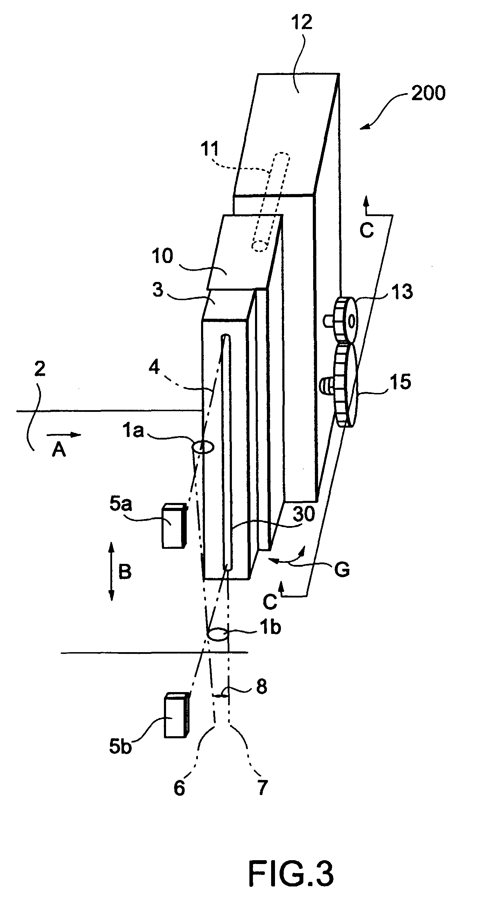

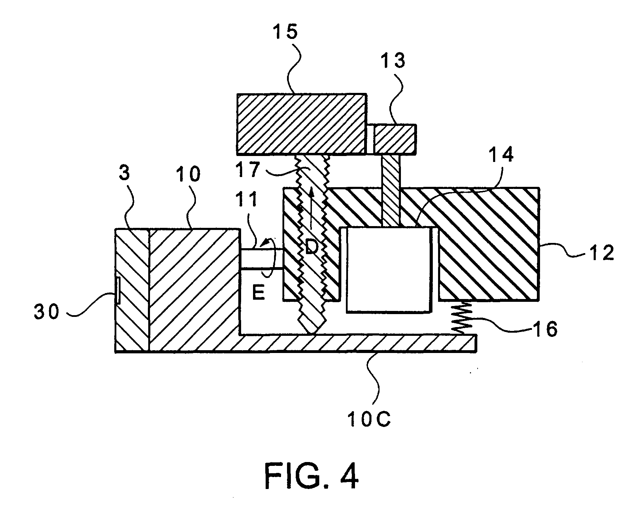

Fig. 3 is a perspective view showing the LED exposing unit 200 and the photoconductor belt 2 and Fig. 4 is a cross section taken along a line C-C in Fig. 3.

Referring to Figs. 3 and 4, the LED exposing unit 200 includes an LED array 3 having a light emitting portion 30, an LED holder 10 having the LED array 3 fixed thereon, a holder 12 coupled with the LED holder 10 and optical sensors 5a and 5b arranged on a side of the photoconductor belt 2 opposite to the side of the light emitting portion 30. The holder 12 supports the LED holder 10 such that the LED holder 10 can rotate in a direction shown by an arrow G in Fig. 3 about a rotary fulcrum shaft 11. The holder 12 is fixed to a body of the image forming device, which is not shown.

The photoconductor belt 2 is formed in positions on opposite edge portions in a main scanning direction B of the photoconductor belt 2 with light transmission holes 1a and 1b, respectively. When the photoconductor belt 2 runs in a direction shown by an arrow A, the optical sensors 5a and 5b can oppose to the light transmission holes 1a and 1b, respectively. The positions of the light transmission holes 1a and 1b oppose to light emitting positions close to the light emitting portion 30 of the LED array 3, respectively.

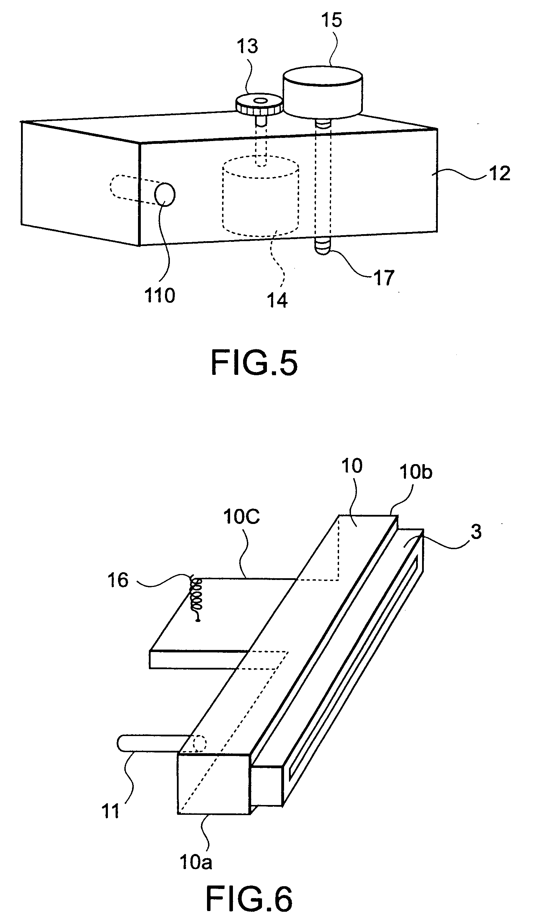

As shown in Fig. 6, the LED holder 10 is provided with the rotary fulcrum shaft 11 in a position close to one end 10a thereof. A plate 10c is formed on the side of the other end 10b of the LED holder 10 and one end of a spring 16 is fixed to the plate 10c. The other end of the spring 16 is fixed to a bottom portion of the holder 12. The spring 16 functions to attract the holder 12 and the plate 10c of the LED holder 10 to each other.

As shown in Fig. 4 and Fig. 5 which is a perspective view of the holder 12, the holder 12 has a shaft coupling hole 110 for receiving and rotatably supporting the rotary fulcrum shaft 11. Further, the holder 12 is provided with a motor 14 having a shaft fixedly mounting a gear 13 and a gear 15 meshed with the gear 13. The gear 15 is arranged on the side of the holder 12 opposite to the rotary fulcrum shaft 11 and a lead screw 17 connected to the gear 15 penetrates the holder 12. A top end of the lead screw 11 is made in contact with the plate 10c of the LED holder 10.

When the motor 14 is driven, the gear 13 fixedly mounted on the shaft of the motor 14 is rotated and hence the gear 15 meshed therewith is rotated. With the rotation of the gear 15, the lead screw 17 is moved in a direction shown by an arrow D while being rotated by the gear 13. In this case, the rotary fulcrum shaft 11 is rotated in a direction shown by an arrow E shown in Fig. 4 and the LED holder 10 is separated from the holder 12 on the side of the other end 10b. That is, the LED holder 10 is rotated in a direction shown by an arrow G about the rotary fulcrum shaft 11 when the lead screw 17 is moved downward.

In Fig. 3, the photoconductor belt 2 having the light transmission holes 1a and 1b in the opposite end portions thereof in the main scanning direction B runs by a motor, etc., which is not shown, in the direction (sub scanning direction) shown by the arrow A. The main scanning direction B of an ideal LED array is perpendicular to the belt running direction A. Light 4 emitted by the light emitting portion 30 of the LED array 3 which extends along the main scanning direction B transmit through the light transmitting holes 1a and 1b formed in the opposite end portions of the photoconductor belt 2 and is detected by the optical sensors 5a and 5b arranged on the opposite side of the photoconductor belt 2.

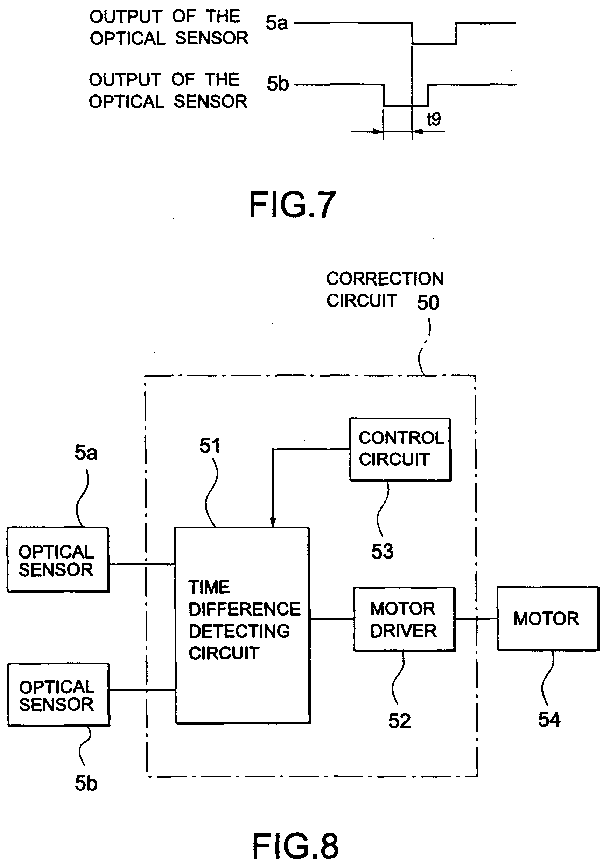

However, when there is a positional displacement between the photoconductor belt 2 and the LED array 3, a main scanning line 7 indicative of the main scanning direction of the LED array 3 may become not parallel to a reference line 6 for an angle detection, which connects edges of the light transmitting holes 1a and 1b formed in the opposite end portions of the photoconductor belt 2 and is perpendicular to the running direction A of the photoconductor belt 2. In such case, a timing with which the optical sensor 5a detects light is delayed from a timing with which the optical sensor 5b detects light by a time difference corresponding to an inclination 8 of the main scanning line 7 with respect to the reference line 6. Fig. 7 shows detection signals output by the optical sensors 5a and 5b when there is an angle between the reference line 6 for the angle detection and the main scanning line 7 of the LED array 3. The amount of angle deviation of the LED array 3 with respect to the reference line 6 for angle detection is accurately calculated from the time difference t9 between the optical detection signals corresponding to the angle deviation.

Fig. 8 is a block diagram of a correction circuit for correcting the angle deviation. In Fig. 8, the correction circuit 50 includes a time difference detection circuit 51 for detecting the time difference t9 between the outputs of the optical sensors 5a and 5b and generating a motor driving control signal corresponding to the detected time difference, a motor driver 52 and a control circuit 53. The time difference detection circuit 51 starts to detect the time difference according to an instruction from the control circuit 53. The motor driver 52 is controlled by the motor driving signal from the time difference detection circuit 51 to drive the motor 14. Thus, the LED holder 10 rotates about the rotary fulcrum shaft 11 such that the angle deviation of the main scanning line 7 of the LED array 3 with respect to the reference line 6 is corrected.

When the output of the optical sensor 5a is delayed from that of the optical sensor 5b as shown in Fig. 7, the LED array 3 fixedly supported by the LED holder 10 is rotated about the rotary fulcrum shaft 11 in the direction shown by the arrow E in Fig. 4 such that the angle deviation of the main scanning line 7 of the LED array 3 with respect to the reference line 6 becomes null. An amount of rotation of the motor 14 depends upon the amount of angle deviation based on the time difference 9 of the LED array 3 with respect to the angle detection reference line 6 and the reduction ratio of the gears 13 and 15. The motor 14 rotates the lead screw 17 in a forward or rearward direction according to the motor drive control signal.

In a case where 2 or more LED arrays are arranged in parallel, it is possible to make all of the LED arrays parallel to the reference line 6 by performing the same regulation for every LED array every time when the light transmitting holes of the photoconductor belt pass through the LED array.

According to this embodiment, the positional error of the LED array is corrected such that the exposing position of the LED array becomes perpendicular to the running direction of the photoconductor belt, as mentioned above. Therefore, the adjustment of the exposing position with respect to the photoconductor belt is facilitated and thus it is possible to form a high quality image thereon, which is free from slanted recording.

Further, since, in this embodiment, the lead screw 17 for the exposing position regulation is arranged in a position remote from the rotary fulcrum shaft 11 of the LED holder 10, it is possible to make the amount of rotation of the LED holder 10 small compared with the amount of rotation of the lead screw 17, making a fine regulation of the LED holder possible.

Incidentally, the light transmission holes 1a and 1b are provided in portions of the photoconductor belt outside the image forming area thereof. Further, the correction of angle error of the main scanning line 7 with respect to the reference line 6 which is performed by the correction circuit shown in Fig. 8 is preferably performed prior to the image formation or during a time in which the image signal is not supplied to the LED array 3.

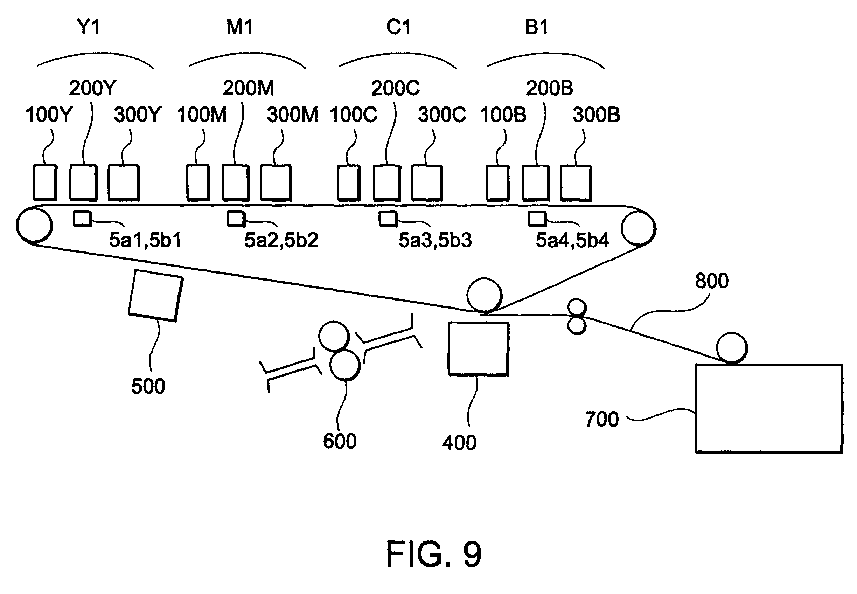

Fig. 9 shows a second embodiment of the image forming device of the present invention, schematically. In the image forming device shown Fig. 9, toner image forming units Y1, M1, C1 and B1 for forming toner images of yellow, magenta, cyan and black toners, respectively, a transfer unit 400 and a cleaning unit 500 are arranged in the order of image forming process.

The yellow toner image forming unit Y1 includes a charging unit 100Y, an exposing unit 200Y and a developing unit 300Y for supplying yellow toner to a photoconductor belt 2.

The magenta toner image forming unit M1 includes a charging unit 100M, an exposing unit 200M and a developing unit 300M for supplying magenta toner to the photoconductor belt 2.

The cyan toner image forming unit C1 includes a charging unit 100C, an exposing unit 200C and a developing unit 300C for supplying cyan toner to the photoconductor belt 2.

The black toner image forming unit B1 includes a charging unit 100B, an exposing unit 200B and a developing unit 300B for supplying black toner to the photoconductor belt 2.

The exposing unit 200Y includes optical sensors 5a1 and 5b1 arranged behind the photoconductor belt 2. The exposing unit 200M includes optical sensors 5a2 and 5b2 arranged behind the photoconductor belt 2. The exposing unit 200C includes optical sensors 5a3 and 5b3 arranged behind the photoconductor belt 2. The exposing unit 200B includes optical sensors 5a4 and 5b4 arranged behind the photoconductor belt 2.

A color image forming operation of the image forming device shown in Fig. 9 will be described. First, the photoconductor belt 2 is electrostatically charged by the charging unit 100Y. Then, a first electrostatic latent image is formed on the photoconductor belt 2 by the LED exposing unit 200Y equipped with the LED array. Thereafter, the first electrostatic latent image is developed with toner of a first color (yellow) by the developing unit 300Y. Thus, a yellow toner image is formed on the photoconductor belt 2.

The photoconductor belt 2 is further driven and charged again by the charging unit 100M with the yellow toner image being thereon. Then, a second electrostatic latent image is formed on the photoconductor belt 2 by the LED exposing unit 200M. The second electrostatic latent image is developed with a second color (magenta) and a magenta image is formed on the photoconductor belt 2 in an overlapping relation to the yellow toner image. This operation is repeated for a third color (cyan) toner and a fourth color (black) toner, respectively, resulting in a 4-color toner image on the photoconductor belt 2.

Thereafter, the 4-color toner image is transferred onto a recording sheet 800 by the transfer unit 400 and fixed thereon by the fixing unit 600. Thereafter, the recording sheet 800 having the 4-color toner image fixed thereon is ejected.

According to this embodiment, it is possible to form a 4-color toner image by running the photoconductor belt 2 not 4 times as in the first embodiment shown in Fig. 1 but one time. Therefore, the 4-color image formation can be sped up.

Constructions of the exposing units and the optical sensors of the respective toner image forming units Y1, M1, C1 and B1 are the same as those of the first embodiment shown in Figs. 3 to 6 and the correction circuit shown in Fig. 8 is provided for each of the toner image forming units. However, the control circuit 50 is used commonly for the toner image forming units.

According to the second embodiment, it is possible to correct not only the error of the recording position due to positional error of the photoconductor belt 2 and/or the positioning error of the LED arrays but also the color deviation due to positional error of the respective LED arrays.

The image forming device according to the present invention is not limited to the embodiments described hereinbefore and can be modified in various ways within the scope of the present invention.

For example, the rotary fulcrum shaft 11 in Fig. 3 may be fixed to not the LED holder 10 but the holder 10 such that the LED holder 10 rotates about the rotary fulcrum shaft 11.

The spring 16 in Fig. 4 may be replaced by a rubber. Further, the gears 13 and 15, the lead screw 17 and the motor 14 may be provided on the LED holder which is a first holder.

Further, the rotary fulcrum shaft 11 may be provided in a center of the LED holder 10. In such case, it may be possible to fix a gear onto the rotary fulcrum shaft 11 and drive the gear by the motor.

## Claims

1. An image forming device comprising:
a photoconductor belt;
a laser emitting diode array for forming an electrostatic latent image on said photoconductor belt;
means for forming a toner image corresponding to the electrostatic latent image on said photoconductor belt; and
correction means for detecting an error angle between a main scanning direction of said laser emitting diode array and a direction perpendicular to a running direction of said photoconductor belt and correcting the error angle.

2. An image forming device as claimed in claim 1, wherein said photoconductor belt is formed with first and second light transmitting holes in opposite end portions thereof in a width direction, respectively, and said correction means comprises first and second optical sensors for detecting light passing through said first and second light transmitting holes, respectively, a detection circuit for detecting a time difference between optical detection signals produced by said first and second optical sensors and detecting an error angle and a correction device for correcting the error angle by rotating the main scanning direction of said laser emitting diode array correspondingly to the detected error angle.

3. An image forming device as claimed in claim 2, wherein said correction device comprises a first holder for holding said laser emitting diode array, a second holder adapted to be coupled with said first holder, a rotary fulcrum shaft for coupling said first holder and said second holder and drive means for rotating said first holder about said rotary fulcrum shaft correspondingly to the detected error angle.

4. An image forming device as claimed in claim 3, wherein said rotary fulcrum shaft is provided on one side of said laser emitting diode array in the main scanning direction and said drive means is provided on the other side of said laser emitting diode array in the main scanning direction and includes a position correcting mechanism for changing a positional relation between said first and second holders such that the error angle is corrected.

5. An image forming device as claimed in claim 4, wherein said position correcting mechanism comprises a motor, a gear fixed to said motor and a lead screw fixed to said gear for changing the positional relation between said first and second holders such that the error angle is corrected.

6. An image forming device comprising:
a photoconductor belt having a first and second light transmitting holes formed in opposite end portions thereof in a width direction;
yellow toner image forming means including a first charging unit, a first exposing unit having a laser emitting diode array for forming an electrostatic latent image on said photoconductor belt and a first developing unit for supplying yellow toner to said photoconductor belt;
magenta toner image forming means including a second charging unit, a second exposing unit having a laser emitting diode array for forming an electrostatic latent image on said photoconductor belt and a second developing unit for supplying magenta toner to said photoconductor belt;
cyan toner image forming means including a third charging unit, a third exposing unit having a laser emitting diode array for forming an electrostatic latent image on said photoconductor belt and a third developing unit for supplying cyan toner to said photoconductor belt; and
black toner image forming means including a fourth charging unit, a fourth exposing unit having a laser emitting diode array for forming an electrostatic latent image on said photoconductor belt,
wherein each of said first to fourth exposing units comprises a first and second optical sensors for detecting lights passed through said first and second light transmitting holes, respectively, a detection circuit for detecting a time difference between optical detection signals produced by said first and second optical sensors and detecting an error angle and a correction device for correcting the error angle by rotating the main scanning direction of said laser emitting diode array correspondingly to the detected error angle.

7. An image forming device according to claim 1, further comprising:
any combination of features which are defined in claims 2 to 6.
